# EUROPEAN PATENT APPLICATION

(11) **EP 4 756 910 A1**
(43) Date of publication of application: **10.06.2026**
(21) Application number: 25220544.8
(22) Date of filing: 03.12.2025
(51) Int. Cl.: H01M 4/36, C01G 53/05, C01G 53/42, H01M 4/525

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 06.12.2024 KR 20240180973
(71) Applicant: SAMSUNG SDI CO., LTD., Yongin-si, Gyeonggi-do 17084 (KR)
(72) Inventor: JANG, Jungsue, 17084 Yongin-si (KR); CHANG, Donggyu, 17084 Yongin-si (KR); CHOO, Sungho, 17084 Yongin-si (KR); AN, Jisang, 17084 Yongin-si (KR); PARK, Jingyu, 17084 Yongin-si (KR); LEE, Jiho, 17084 Yongin-si (KR)
(74) Representative: Maiwald GmbH

(57) **Abstract**

A method for preparing a positive electrode active material may include: (i) adding an aluminum raw material and sodium hydroxide to an aqueous (e.g., watersoluble) solvent to prepare a coating solution having a pH range of 12.5 to 14; (ii) adding core particles including a lithium nickel-based composite oxide to the coating solution to prepare a first mixed solution; (iii) adding a cobalt raw material to the first mixed solution to prepare a second mixed solution; and (iv) drying and heat-treating the second mixed solution to obtain a positive electrode active material.

## Description

### BACKGROUND

### 1. Field

One or more embodiments of the present disclosure relate to positive electrode active materials, preparation methods of the positive electrode active materials, positive electrodes including the positive electrode active materials, and rechargeable lithium batteries including the positive electrodes.

### 2. Description of the Related Art

Portable electronic (information) devices (such as cell cellphones, laptops, smart phones, and/or the like) and/or electric vehicles utilize rechargeable lithium batteries (e.g., as driving power sources) due to their high energy density. Recently, there has been increasing research into utilizing rechargeable lithium batteries with high energy density as driving power sources for hybrid and electric vehicles as well as power storage sources for energy storage systems.

Various positive electrode active materials have been investigated for utilization in or to realize rechargeable lithium batteries for such applications. Among them, lithium nickel-based oxides, lithium nickel manganese cobalt composite oxides, lithium nickel cobalt aluminum composite oxides, and lithium cobalt oxides are mainly or predominantly utilized as positive electrode active materials. With the growing demand for large-capacity, high-energy-density rechargeable lithium batteries, there is a need or desire to develop positive electrode active materials that improve or enhance both (e.g., simultaneously) stability and performance.

### SUMMARY

One or more aspects of embodiments of the present disclosure are directed toward a positive electrode active material having economic efficiency, high capacity (e.g., high initial charge/discharge capacity) and long cycle-life characteristics and improved or enhanced high-voltage and high-temperature characteristics, a method for preparing the positive electrode active material, and a positive electrode and a rechargeable lithium battery including the positive electrode.

Additional aspects of embodiments will be set forth in part in the description which follows and, in part, will be apparent from the description or may be learned by practice of the presented embodiments of the disclosure.

In one or more embodiments, a method for preparing a positive electrode active material includes: (i) adding an aluminum raw material and sodium hydroxide to an aqueous (e.g., water-soluble) solvent to prepare a coating solution having a pH range of about 12.5 to about 14; (ii) adding core particles including a lithium nickel-based composite oxide to the coating solution to prepare a first mixed solution; (iii) adding a cobalt raw material to the first mixed solution to prepare a second mixed solution; and (iv) drying and heat-treating the second mixed solution to obtain a positive electrode active material.

In one or more embodiments, a positive electrode active material includes core particles including a lithium nickel-based composite oxide; and a coating layer on the surface of the core particles and including aluminum and cobalt; wherein the positive electrode active material includes sodium, and a sodium content (e.g., amount), based on 100 wt% of a total metal excluding (e.g., not including) lithium (e.g., based on a total of 100 wt% of metal excluding (e.g., not including) lithium) in the lithium nickel-based composite oxide, is in a range of from about 0.08 wt% to about 0.2 wt%.

In one or more embodiments, a positive electrode includes a current collector; and a positive electrode active material layer on the current collector; wherein the positive electrode active material layer includes the positive electrode active material.

One or more embodiments of the present disclosure provide a rechargeable lithium battery including the positive electrode as described in one or more embodiments, a negative electrode, and an electrolyte.

According to one or more embodiments of the present disclosure, a positive electrode active material maximizes or increases capacity (e.g., initial charge/discharge capacity) while minimizing or reducing production cost, thereby securing long cycle-life characteristics and improving or enhancing high-voltage and high-temperature characteristics. If (e.g., when) the positive electrode active material is applied to a rechargeable lithium battery, high initial charge/discharge capacity and efficiency may be achieved under high-voltage operating conditions, and long cycle-life characteristics may be realized under high-voltage and high-temperature conditions.

For example, one or more embodiments of the present disclosure is realized by forming a coating layer including aluminum and cobalt on lithium nickel-based composite oxide core particles through a sequential wet chemical process. The method involves preparing a high-pH aqueous (e.g., water-soluble) coating solution with aluminum raw material and sodium hydroxide, introducing the core particles to form a first mixed solution, and subsequently adding a cobalt precursor to form a second mixed solution. This is followed by drying and heat treatment to yield the final coated active material. The presence of sodium in the coating layer, controlled within a specific (e.g., set or predetermined) weight percentage range relative to the total metal content (excluding (e.g., not including) lithium), plays a critical role in enhancing the structural and thermal stability of the active material. This process results in a positive electrode active material that exhibits improved or enhanced electrochemical performance, including higher initial charge/discharge capacity, better retention over repeated cycles, and/or enhanced stability under high-voltage and high-temperature conditions.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

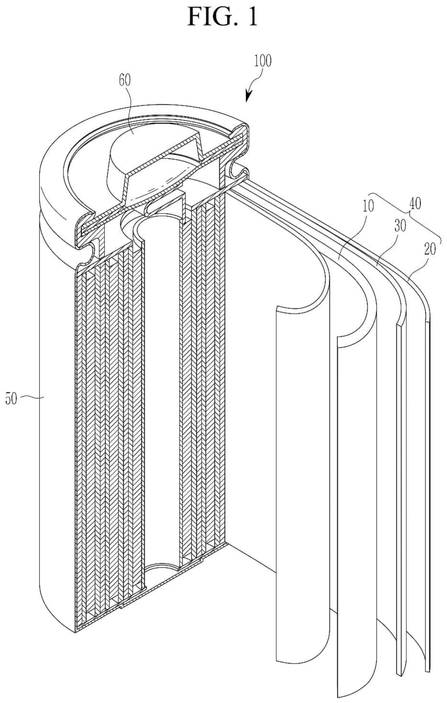

FIGS. 1-4 each are views schematically illustrating rechargeable lithium batteries according to one or more embodiments.

### DETAILED DESCRIPTION

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the spirit or scope of the present disclosure. The drawings and description are to be regarded as illustrative in nature and not restrictive. Like reference numerals designate like elements throughout the attached drawings and the written description, and duplicative descriptions thereof may not be provided in the specification.

The terminology used herein is used to describe one or more embodiments only and is not intended to limit the scope of the present disclosure.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise.

The singular expression includes the plural expression unless the context clearly dictates otherwise.

As used herein, the term "and/or" or "or" includes any and all combinations of one or more of the associated listed items. For example, "or" is not to be construed as an exclusive meaning, for example, "A or B" is construed to include A, B, A+B, and/or the like.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within ±30%, ±20%, ±10%, or ±5% of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein. Accordingly, Applicant reserves the right to amend the disclosure, including the claims, to expressly recite any sub-range subsumed within the ranges expressly recited herein.

As used herein, "combination thereof" refers to a mixture, a laminate, a composite, a copolymer, an alloy, a blend, a reaction product, and/or the like of the constituents.

Herein, it should be understood that the terms, such as "has," "includes," "having," or "including," are intended to designate the presence of an embodied feature, number, step (e.g., act or task), element, or a (e.g., any suitable) combination thereof, but it does not preclude the possibility of the presence or addition of one or more other features, number, step (e.g., act or task), element, or a (e.g., any suitable) combination thereof. For example, it should be understood that the term "comprise(s)/comprising," "include(s)/including," or "have/has/having" specifies the presence of stated features, integers, steps (e.g., acts or tasks), operations, elements, and/or components, but do not preclude the presence or addition of one or more other features, integers, steps (e.g., acts or tasks), operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps (e.g., acts or tasks), operations, elements, and/or components, without or essentially without the presence of other features, integers, steps (e.g., acts or tasks), operations, elements, components, and/or groups thereof.

In the drawings, the thickness of layers, films, panels, regions, and/or the like may be exaggerated for clarity.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

The term "layer" herein includes not only a shape formed on the whole surface if (e.g., when) viewed from a plan view, but also a shape formed on a partial surface.

The average particle diameter may be measured by any suitable method that is generally available to or generally used by those skilled in the art, for example, by a particle size analyzer and/or by a transmission electron microscope (TEM) image and/or a scanning electron microscope (SEM) image. In one or more embodiments, it may be feasible to obtain an average particle diameter value by measuring using a dynamic light scattering (DLS) method, performing data analysis, counting the number of particles for each particle size range, and calculating from this data. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope image. In one or more embodiments, dynamic light scattering (DLS) may be used, where particle counts within size ranges are analyzed to calculate the average particle diameter (D₅₀). Also, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D₅₀ value based on a 50% cumulative particle size distribution. Also, in the present disclosure, if (e.g., when) particles are substantially cylindrical or spherical, "diameter" refers to the average diameter of such particles. If (e.g., when) the particles are non-cylindrical or irregular in shape, "diameter" refers to the average major axis length of the particles.

Herein, "metal" is interpreted as a concept including ordinary metals, transition metals, and metalloids (semi-metals).

### Method of Preparing Positive Electrode Active Material

In one or more embodiments, a method for preparing a positive electrode active material may include: (i) adding an aluminum raw material and sodium hydroxide to an aqueous (e.g., water-soluble) solvent to prepare a coating solution having a pH range of from about 12.5 to about 14; (ii) adding core particles including a lithium nickel-based composite oxide to the coating solution to prepare a first mixed solution; (iii) adding a cobalt raw material to the first mixed solution to prepare a second mixed solution; and (iv) drying and heat-treating the second mixed solution to obtain a positive electrode active material.

The positive electrode active materials that are generally available or generally used have a problem in that they deteriorate if (e.g., when) washed with low pH washing water during the washing and coating stages, which reduces the efficiency of rechargeable lithium batteries. Accordingly, by controlling the pH of the washing water during washing, outflow of lithium, oxygen, and/or the like from the positive electrode active material may be minimized or reduced, thereby preventing deterioration (or reducing a degree or occurrence of deterioration), and accordingly, a coating layer may be uniformly (e.g., substantially uniformly) formed with a very thin thickness on the surface of the positive electrode active material, thereby improving or enhancing the efficiency and stability of the rechargeable lithium batteries.

In one or more embodiments, first, a coating solution may be prepared by adding aluminum raw material and sodium hydroxide to an aqueous (e.g., water-soluble) solvent, and then a positive electrode active material including a lithium nickel-based composite oxide may be added and mixed, and then a cobalt raw material may be mixed and dried and heat-treated to form a coating layer, which may be referred to be a salt-dissolving wet coating method.

The aqueous solvent may include distilled water, an alcohol-based solvent, or a (e.g., any suitable) combination thereof. The aluminum raw material may be, for example, aluminum sulfate. The aluminum sulfate may be an optimal or suitable raw material to form a substantially uniform aluminum coating layer on lithium nickel-based composite oxide. The aluminum raw material may be a raw material to form an aluminum coating layer, and the aluminum content (e.g., amount) in the aluminum raw material, based on 100 mol% of the total metal excluding (e.g., not including) lithium (e.g., based on a total of 100 mol% of metal excluding (e.g., not including) lithium) in the lithium nickel-based composite oxide, may be in a range of from about 0.1 mol% to about 1.0 mol%, for example, from about 0.1 mol% to about 0.9 mol%, from about 0.3 mol% to about 0.7 mol%, from about 0.2 mol% to about 0.5 mol%, or from about 0.1 mol% to about 0.3 mol%. By adding the content (e.g., amount) of the aluminum raw material within the foregoing range, a coating layer having a substantially uniform thickness with a thin thickness of several nanometers to several hundred nanometers may be formed, thereby reducing an amount of gas generated from a rechargeable lithium battery under high voltage or high temperature driving conditions and improving or enhancing high capacity (e.g., high initial charge/discharge capacity) and long cycle-life characteristics.

The sodium hydroxide may be a raw material to control the pH of the coating solution, and the sodium content (e.g., amount) in the sodium hydroxide, based on 100 mol% of the total metal excluding (e.g., not including) lithium (e.g., based on a total of 100 mol% of metal excluding (e.g., not including) lithium) in the lithium nickel-based composite oxide, may be in a range of from about 2.0 mol% to about 8.0 mol%, for example, from about 3.0 mol% to about 8.0 mol%, from about 4.0 mol% to about 8.0 mol%, from about 4.0 mol% to about 6.0 mol%, from about 5.0 mol% to about 8.0 mol%, or from about 5.5 mol% to about 7.0 mol%. By adding the sodium content (e.g., amount) in sodium hydroxide within the foregoing range, outflow of lithium, oxygen, and/or the like from the positive electrode active material may be minimized or reduced, thereby preventing deterioration (or reducing a degree or occurrence of deterioration), and accordingly, a very thin and substantially uniform coating layer may be formed on the surface of the positive electrode active material, thereby improving or enhancing the efficiency and stability of the rechargeable lithium batteries.

The coating solution prepared by adding and mixing aluminum raw material into the aqueous solvent may have a pH range of from about 1.5 to about 3.5, but the coating solution may be prepared by further adding sodium hydroxide, and at this time, the pH of the coating solution may be in a range of from about 12.5 to about 14, for example, from about 13.0 to about 13.5, about 12.8 to about 13.9, or about 12.8 to about 13.4. If (e.g., when) the pH of the coating solution is within the foregoing range, outflow of lithium, oxygen, and/or the like from the positive electrode active material may be minimized or reduced to prevent deterioration (or to reduce a degree or occurrence of deterioration), and accordingly, a coating layer may be uniformly (e.g., substantially uniformly) formed with a very thin thickness on the surface of the positive electrode active material, thereby improving or enhancing the efficiency and stability of the rechargeable lithium batteries.

The adding of the core particles including a lithium nickel-based composite oxide to the coating solution to prepare a first mixed solution may be performed for about 5 minutes to about 80 minutes, for example, for about 5 minutes to about 60 minutes, or for about 5 minutes to about 40 minutes. At this time, the pH of the first mixed solution may be in a range of from about 10 to about 14, for example, about 10 to about 13.5, or about 10 to about 13. If (e.g., when) the pH of the first mixed solution is within the foregoing range, it may be advantageous or beneficial for forming a coating layer of substantially uniform thickness.

The lithium nickel-based composite oxide may be represented by Chemical Formula 1.

**Chemical Formula 1** Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² may each independently be one or more elements selected from among aluminum (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), yttrium (Y), tungsten (W), zinc (Zn), and zirconium (Zr), and X may be one or more elements selected from among fluorine (F), phosphorus (P), and sulfur (S). Herein, M¹ and M² may be different from each other.

In Chemical Formula 1, 0.6≤x1≤1, 0≤y1≤0.4, and 0≤z1≤0.4, or 0.8≤x1≤1, 0≤y1≤0.2, and 0≤z1≤0.2, or 0.9≤x1<1, 0<y1≤0.1, and 0≤z1≤0.1.

For example, in the lithium nickel-based composite oxide, a nickel content (e.g., amount), based on 100 mol% of a metal excluding (e.g., not including) lithium (e.g., based on a total of 100 mol% of metal excluding (e.g., not including) lithium). may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel positive electrode active materials may achieve high capacity (e.g., high initial charge/discharge capacity) and may be applied to high-capacity, high-density rechargeable lithium batteries.

The core particle including the lithium nickel-based composite oxide may be in the form of a particle, and the particle may be in a form of secondary particles made by agglomerating a plurality of primary particles, single particles, or a (e.g., any suitable) combination thereof. The secondary particles and single particles may be spherical (e.g., substantially spherical), elliptical (e.g., substantially elliptical), polyhedral (e.g., substantially polyhedral), or irregular in shape, and primary particles constituting the secondary particles may be spherical (e.g., substantially spherical), elliptical (e.g., substantially elliptical), plate-shaped (e.g., substantially plate-shaped), or a (e.g., any suitable) combination thereof.

An average particle diameter (D₅₀) of the core particles may be in a range of from about 10 µm to about 25 µm, for example, from about 11 µm to about 20 µm, or from about 12 µm to about 18 µm. As used herein, if (e.g., when) a definition is not otherwise provided, the average particle diameter (D₅₀) refers to a diameter of particles having a cumulative volume of 50 volume% in the particle size distribution that is obtained by measuring the size (e.g., diameter or major axis length) of about 20 particles at random in a scanning electron microscope image for positive electrode active materials.

The cobalt raw material may be, for example, cobalt sulfate. The cobalt sulfate may be the optimal or suitable raw material to form a substantially uniform cobalt coating layer on lithium nickel-based composite oxide. The cobalt raw material may be a raw material to form a coating layer, and the cobalt content (e.g., amount) in the cobalt raw material, based on 100 mol% of a total metal excluding (e.g., not including) lithium (e.g., based on a total of 100 mol% of metal excluding (e.g., not including) lithium) in the finally obtained positive electrode active material, may be in a range of from about 1.0 mol% to about 5.0 mol%, for example, from about 1.5 mol% to about 4.5 mol%, from about 2.0 mol% to about 4.0 mol%, from about 2.0 mol% to about 3.0 mol%, or from about 2.5 mol% to about 3.5 mol%. By adding the cobalt content (e.g., amount) of the cobalt raw material within the foregoing range, a coating layer having a substantially uniform thickness with a thin thickness of several nanometers to several hundred nanometers may be formed, thereby reducing an amount of gas generated from a rechargeable lithium battery under high voltage or high temperature driving conditions and improving or enhancing high capacity (e.g., high initial charge/discharge capacity) and long cycle-life characteristics.

In the sodium hydroxide added into the aqueous solvent and the cobalt raw material, a molar ratio of the sodium content (e.g., amount) in the sodium hydroxide to the cobalt content (e.g., amount) in the cobalt raw material may be in a range of from about 1.5:1 to about 3:1, for example, from about 1.5:1 to about 2.5:1, from about 1.5:1 to about 2:1, or from about 2:1 to about 3:1. If (e.g., when) the molar ratio of the sodium content (e.g., amount) in the sodium hydroxide to the cobalt content (e.g., amount) in the cobalt raw material is within the foregoing range, outflow of lithium, oxygen, and/or the like from the positive electrode active material may be minimized or reduced, thereby preventing deterioration (or reducing a degree or occurrence of deterioration), and accordingly, a very thin and substantially uniform coating layer may be formed on the surface of the positive electrode active material, thereby improving or enhancing the efficiency and stability of the rechargeable lithium batteries.

The adding of the cobalt raw material to the first mixed solution to prepare the second mixed solution may be performed for about 5 minutes to about 80 minutes, for example, about 5 minutes to about 60 minutes, or about 5 minutes to about 40 minutes. The pH of the second mixed solution after stirring may be in a range of about 9 to about 13, for example, in a range of about 9 to about 12, or from about 9 to about 11. If (e.g., when) the pH of the second mixed solution is within the foregoing range, it may be advantageous or beneficial for forming a coating layer of substantially uniform thickness.

The process of drying the second mixed solution may be understood as a process of removing a solvent, and may be performed at a temperature range, for example, about 40 °C to about 240 °C, about 100 °C to about 220 °C, or about 150 °C to about 200 °C.

The heat treatment process after the drying process may be understood as a process of forming a coating layer, and may be performed, for example, in an oxygen atmosphere at a temperature range of about 700 °C to about 850 °C, about 750 °C to about 840 °C, or about 800 °C to about 830°C for about 2 hours to about 20 hours or about 3 hours to about 10 hours.

### Positive Electrode Active Material

In one or more embodiments, a positive electrode active material may include core particles including a lithium nickel-based composite oxide; and a coating layer on the surface of the core particles and including aluminum and cobalt; wherein the positive electrode active material includes sodium and a sodium content (e.g., amount), based on 100 wt% of a total metal excluding (e.g., not including) lithium (e.g., based on a total of 100 wt% of metal excluding (e.g., not including) lithium) in the lithium nickel-based composite oxide, may be in a range of from about 0.08 wt% to about 0.2 wt%.

### Core Particles

According to one or more embodiments, a positive electrode active material may include core particles including a lithium nickel-based composite oxide and include sodium, and a sodium content (e.g., amount), based on 100 wt% of a total metal excluding (e.g., not including) lithium (e.g., based on a total of 100 wt% of metal excluding (e.g., not including) lithium) in the lithium nickel-based composite oxide, may be in a range of from about 0.08 wt% to about 0.2 wt%.

Because the lithium nickel-based composite oxide is described in one or more embodiments, a more detailed description may not be provided.

The positive electrode active material may include sodium, and a sodium content (e.g., amount), based on 100 wt% of a total metal excluding (e.g., not including) lithium (e.g., based on a total of 100 wt% of metal excluding (e.g., not including) lithium) in the lithium nickel-based composite oxide, may be in a range of from about 0.08 wt% to about 0.2 wt%, for example, from about 0.1 wt% to about 0.2 wt%, from about 0.1 wt% to about 0.18 wt%, about 0.082 wt% to about 0.173 wt%, or from about 0.1 wt% to about 0.15 wt%. If (e.g., when) sodium in the core particle is within the foregoing range, outflow of lithium, oxygen, and/or the like from the positive electrode active material may be minimized or reduced, thereby preventing deterioration (or reducing a degree or occurrence of deterioration), and accordingly, a very thin and substantially uniform coating layer may be formed on the surface of the positive electrode active material, thereby improving or enhancing the efficiency and stability of the rechargeable lithium battery.

### Coating Layer

According to one or more embodiments, the positive electrode active material may further include a coating layer arranged on the surface of the core particle and including aluminum and cobalt, and the aluminum content (e.g., amount) in the coating layer, based on 100 at% of the total metal excluding (e.g., not including) lithium (e.g., based on a total of 100 at% of metal excluding (e.g., not including) lithium) in the positive electrode active material, may be in a range of from about 0.1 at% to about 1.0 at%, for example, from about 0.12 at% to about 0.9 at%, from about 0.14 at% to about 0.8 at%, from about 0.16 at% to about 0.7 at%, from about 0.18 at% to about 0.6 at%, or from about 0.2 at% to about 0.5 at%. In one or more embodiments, the cobalt content (e.g., amount) in the coating layer, based on 100 at% of the total metal excluding (e.g., not including) lithium (e.g., based on a total of 100 at% of metal excluding (e.g., not including) lithium) in the positive electrode active material, may be in a range of from about 1.0 at% to about 4.0 at%, for example, from about 1.2 at% to about 3.8 at%, from about 1.4 at% to about 3.6 at%, from about 1.6 at% to about 3.4 at%, from about 1.8 at% to about 3.2 at%, or from about 2.0 at% to about 3.0 at%.

The aluminum content (e.g., amount) in the coating layer refers only to the aluminum content (e.g., amount) in the coating layer, regardless of the aluminum in the core particles, and the cobalt content (e.g., amount) in the coating layer refers only to the cobalt content (e.g., amount) in the coating layer, regardless of the cobalt in the core particles. If (e.g., when) the aluminum and cobalt contents (e.g., amounts) in the coating layer satisfy the foregoing ranges, it may be feasible to form a coating layer having a substantially uniform and thin thickness, the resistance (e.g., electrical resistance) of the positive electrode active material may not increase, and side reactions with the electrolyte may be effectively or suitably suppressed or reduced, thereby improving or enhancing the cycle-life characteristics of rechargeable lithium batteries under high-voltage and high-temperature conditions. For example, if (e.g., when) the content (e.g., amount) of aluminum or cobalt in the coating layer is excessive or substantial, a substantially uniform coating layer may not be formed or resistance (e.g., electrical resistance) may increase, which may deteriorate or reduce charge/discharge efficiency and cycle-life characteristics, whereas if (e.g., when) the content (e.g., amount) of aluminum or cobalt in the coating layer is too small, a coating layer of an appropriate or suitable thickness may not be formed, which may reduce the effect of suppressing or reducing side reactions with the electrolyte. The aluminum and cobalt contents (e.g., amounts) in the coating layer may be measured, for example, by scanning electron microscopy-energy dispersive spectroscopy (SEM-EDS) or X-ray photoelectron spectroscopy (XPS) on the surface of the positive electrode active material.

The coating layer according to one or more embodiments may be in the form of a film that is continuously around (e.g., surrounds) the surface of the core particle, or, for example, it may be in the form of a shell that is around (e.g., surrounds) the entire (e.g., substantially entire) surface of the core particle. This is distinct from a structure in which only portion of the surface of the core particle is partially coated. According to one or more embodiments, the coating layer may be formed in a form that completely (e.g., substantially completely) covers the surface of the core particle while being formed with a very thin and substantially uniform thickness, whereby the positive electrode active material has improved or enhanced structural stability without increasing resistance (e.g., electrical resistance) or decreasing capacity (e.g., initial charge/discharge capacity), effectively or suitably suppressing or reducing side reactions with the electrolyte, reducing gas generation under high voltage and high temperature conditions, and implementing long cycle-life characteristics.

The coating layer according to one or more embodiments may have a thickness range of from about 30 nm to about 500 nm, for example, from about 30 nm to about 450 nm, from about 30 nm to about 400 nm, from about 30 nm to about 350 nm, from about 30 nm to about 300 nm, from about 30 nm to about 250 nm, from about 30 nm to about 200 nm, from about 30 nm to about 150 nm, from about 50 nm to about 500 nm, from about 80 nm to about 500 nm, or from about 100 nm to about 500 nm. If (e.g., when) the coating layer satisfies the foregoing thickness range, the structural stability of the positive electrode active material may be improved or enhanced without increasing resistance (e.g., electrical resistance) or reducing capacity (e.g., initial charge/discharge capacity) due to the coating, and the side reaction with the electrolyte may be effectively or suitably suppressed or reduced. The thickness of the coating layer may be measured through, for example, Time-of-Flight secondary ion mass spectrometry (TOF-SIMS), XPS, or EDS analysis, and the thickness range of the coating layer may be measured through TEM-EDS line profile.

The coating layer according to one or more embodiments may have a thin thickness of several nanometers to several hundred nanometers, while having a substantially uniform thickness. For example, a deviation in a coating layer thickness in one positive electrode active material particle may be less than or equal to about 20%, less than or equal to about 18%, or less than or equal to about 15%. Herein, the deviation in the coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the foregoing range refers to that a coating layer of substantially uniform thickness is formed in a good or suitable shape on the surface of the positive electrode active material particle. Accordingly, structural stability of the positive electrode active material may be improved or enhanced, side reactions with the electrolyte may be effectively or suitably suppressed or reduced, and the increase in resistance (e.g., electrical resistance) or decrease in capacity (e.g., initial charge/discharge capacity) due to coating may be minimized or reduced.

In one or more embodiments, the coating layer may include nickel in addition to aluminum and cobalt. The nickel may be in the core particles and introduced during the coating layer formation process, and its content (e.g., amount) is not particularly limited. A coating layer according to one or more embodiments may include aluminum and cobalt while optionally including nickel, and may be formed to have a thin and substantially uniform thickness, thereby improving or enhancing the high-voltage characteristics of the positive electrode active material and enhancing cycle-life characteristics.

In one or more embodiments, the coating layer may further include sulfur in addition to the aluminum and cobalt. The sulfur may be introduced during the process of adding the aluminum sulfate as an aluminum raw material, which is added to form an aluminum coating layer, and a content (e.g., amount) thereof is not particularly limited. The coating layer according to one or more embodiments may include aluminum and cobalt while optionally including sulfur, which may improve or enhance the high-voltage characteristics of a positive electrode active material and enhance the cycle-life characteristics.

### Positive Electrode

In one or more embodiments, a positive electrode may include a positive electrode current collector and a positive electrode active material layer on the current collector, wherein the positive electrode active material layer includes the positive electrode active material as described in one or more embodiments. The positive electrode active material layer may further include other types (kinds) of positive electrode active materials in addition to the positive electrode active materials as described in one or more embodiments. In one or more embodiments, the positive electrode active material layer may optionally further include a binder, a conductive (e.g., electrically conductive) material, or a (e.g., any suitable) combination thereof.

### Binder

The binder may improve or enhance binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

### Conductive Material

The conductive material may be included to provide electrode conductivity (e.g., electrical conductivity), and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; or a mixture thereof.

Each amount of the binder and the conductive material may be in a range of from about 0.5 wt% to about 5 wt%, based on a total of 100 wt% of the positive electrode active material layer.

The current collector may include Al thin film, but embodiments of the present disclosure are not limited thereto.

### Rechargeable Lithium Battery

One or more embodiments of the present disclosure provide a rechargeable lithium battery including the positive electrode as described in one or more embodiments, a negative electrode, and an electrolyte. As an example, the rechargeable lithium battery may include a positive electrode, a negative electrode, a separator between the positive electrode and the negative electrode, and an electrolyte solution.

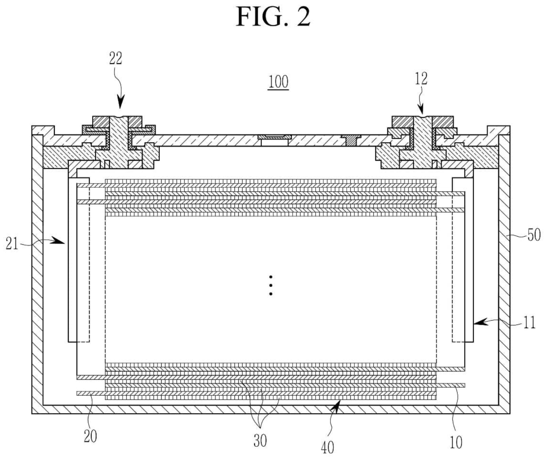

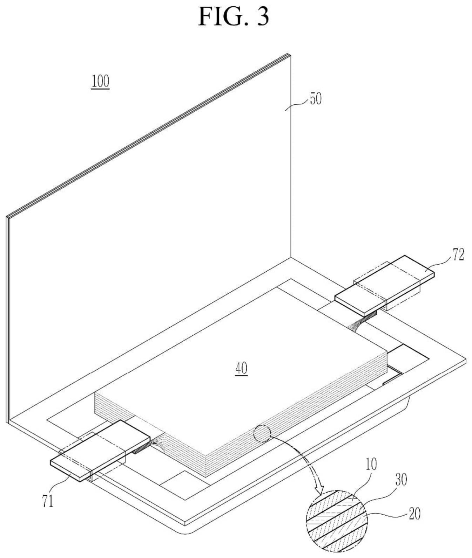

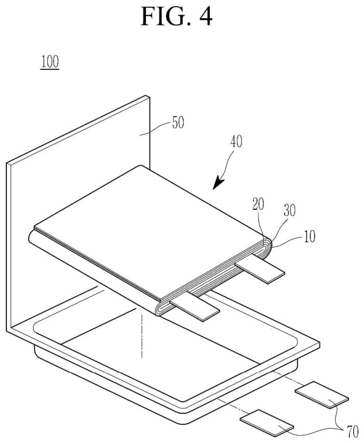

The rechargeable lithium battery may be classified into cylindrical, prismatic, pouch, coin, and/or the like depending on the shape. FIGS. 1 to 4 are schematic views illustrating the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as illustrated in FIG. 1. In one or more embodiments, in FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 serving as an electrical path to induce the current formed in the electrode assembly 40 to the outside.

The rechargeable lithium battery according to one or more embodiments may be rechargeable at a high voltage or may be suitable to be driven at a high voltage. For example, the upper charging limit voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery may significantly or substantially reduce an amount of gas generated even if (e.g., when) charged at high voltage and may achieve high capacity (e.g., high initial charge/discharge capacity) and long cycle-life characteristics.

### Negative Electrode

The negative electrode may include a current collector and a negative electrode active material layer on the current collector, and the negative electrode active material layer may include a negative electrode active material, and may further include a binder, a conductive (e.g., electrically conductive) material, or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous (e.g., non-crystalline) carbon, or a (e.g., any suitable) combination thereof as a carbon-based negative electrode active material. The crystalline carbon may be irregular, or sheet (e.g., substantially sheet), flake (e.g., substantially flake), spherical (e.g., substantially spherical), or fiber (e.g., substantially fiber) shaped (e.g., in a form of fibers) natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (wherein 0 < x ≤ 2; e.g., SiO₂), a Si-Q alloy (wherein Q is an element selected from among an alkali metal, an alkaline-earth metal, a Group 13 element, a Group 14 element (excluding (e.g., not including) Si), a Group 15 element, a Group 16 element, a transition metal, a rare earth element, and a (e.g., any suitable) combination thereof, for example, Mg, Ca, Sr, Ba, radium (Ra), scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, lead (Pb), ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, indium (In), thallium (TI), germanium (Ge), P, arsenic (As), antimony (Sb), bismuth (Bi), S, selenium (Se), tellurium (Te), polonium (Po), and a (e.g., any suitable) combination thereof), or a (e.g., any suitable) combination thereof. The Sn-based negative electrode active material may be Sn, SnOₓ (wherein 0 < x ≤ 2; e.g., SnO₂), a Sn alloy, or a (e.g., any suitable) combination thereof.

The silicon-carbon composite may be a composite of silicon and amorphous (e.g., non-crystalline) carbon. An average particle diameter (D₅₀) of the silicon-carbon composite particles may be in a range of, for example, from about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous carbon may also be present between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, or a (e.g., any suitable) combination thereof. The amorphous carbon may include a soft carbon, a hard carbon, a mesophase pitch carbonized product, and/or calcined coke.

If (e.g., when) the silicon-carbon composite includes silicon and amorphous (e.g., non-crystalline) carbon, an amount of silicon may be in a range of from about 10 wt% to about 50 wt% and an amount of amorphous (e.g., non-crystalline) carbon may be in a range of from about 50 wt% to about 90 wt%, based on a total of 100 wt% of the silicon-carbon composite. In one or more embodiments, if (e.g., when) the composite includes silicon, amorphous (e.g., non-crystalline) carbon, and crystalline carbon, an amount of silicon may be in a range of from about 10 wt% to about 50 wt%, a content (e.g., amount) of crystalline carbon may be in a range of from about 10 wt% to about 70 wt%, and an amount of amorphous (e.g., non-crystalline) carbon may be in a range of from about 20 wt% to about 40 wt%, based on a total of 100 wt% of the silicon-carbon composite.

In one or more embodiments, a thickness of the amorphous carbon coating layer may be in a range of from about 5 nm to about 100 nm. An average particle diameter (D₅₀) of the silicon particles (primary particles) may be in a range of from about 10 nm to about 1 µm or from about 10 nm to about 200 nm. The silicon particles may exist as silicon alone, in the form of a silicon alloy, or in an oxidized form. The oxidized form of silicon may be represented by SiOₓ (wherein 0 < x ≤ 2; e.g., SiO₂). At this time, the atomic content (e.g., amount) ratio of Si:O, which indicates a degree of oxidation, may be in a range of from about 99:1 to about 33:67. As used herein, if (e.g., when) a definition is not otherwise provided, an average particle diameter (D₅₀) indicates a diameter of particle where a cumulative volume is about 50 volume% in a particle size distribution.

The Si-based negative electrode active material or the Sn-based negative electrode active material may be mixed with the carbon-based negative electrode active material. If (e.g., when) the Si-based negative electrode active material or the Sn-based negative electrode active material and the carbon-based negative electrode active material are mixed and utilized, the mixing ratio may be a weight ratio of about 1:99 to about 90:10.

### Binder

The binder may serve to well or suitably adhere the negative electrode active material particles to each other and also to adhere the negative electrode active material to the current collector. The binder may be a non-aqueous (e.g., water-insoluble) binder, an aqueous (e.g., water-soluble) binder, a dry binder, or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a (e.g., any suitable) combination thereof.

If (e.g., when) an aqueous (e.g., water-soluble) binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a (e.g., any suitable) combination thereof.

### Conductive Material

The conductive material (conductor) may be included to provide electrode conductivity (e.g., electrical conductivity), and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; or a mixture thereof.

An amount of the negative electrode active material may be in a range of from about 95 wt% to about 99.5 wt%, based on a total of 100 wt% of the negative electrode active material layer, and an amount of the binder may be in a range of from about 0.5 wt% to about 5 wt%, based on a total of 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative current collector may be in a range of, for example, from about 1 µm to about 20 µm, from about 5 µm to about 15 µm, or from about 7 µm to about 10 µm.

### Electrolyte

For example, the electrolyte for a rechargeable lithium battery may be an electrolyte solution, which may include a non-aqueous (e.g., water-insoluble) organic solvent and a lithium salt.

The non-aqueous organic solvent may serve as a medium to transmit ions taking part in the electrochemical reaction of a rechargeable lithium battery. The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, and may include a double bond, an aromatic ring, or an ether group, and/or the like); amides, such as dimethylformamide and/or the like; dioxolanes, such as 1,3-dioxolane, 1,4-dioxolane, and/or the like; sulfolanes; and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is generally available to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethylene carbonate, vinylene carbonate, and/or an ethylene carbonate-based compound to improve or enhance battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of from about 0.1 M to about 2.0 M. If (e.g., when) the concentration of lithium salt is within the foregoing range, the electrolyte may have appropriate or suitable ion conductivity and viscosity, and thus excellent or suitable performance may be achieved and lithium ions may move effectively or suitably.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a (e.g., any suitable) combination thereof on a surface (e.g., one surface or both surfaces (e.g., two opposite surfaces)) of the porous substrate.

The porous substrate may be a polymer film formed or composed of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (PTFE; e.g., Teflon^{™}), or a copolymer or mixture of two or more thereof.

The porous substrate may have a thickness range of from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a (e.g., any suitable) combination thereof, but embodiments of the present disclosure are not limited thereto. An average particle diameter (D₅₀) of the inorganic particles may be in a range of from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

The thickness of the coating layer may be in a range of from about 0.5 µm to about 20 µm, for example, from about 1 µm to about 10 µm or from about 1 µm to about 5 µm.

Examples and Comparative Examples of the present disclosure are described in more detail herein. However, the following examples are only examples of the present disclosure, and embodiments of the present disclosure are not limited to the following examples.

### Example 1

### 1. Preparation of Positive Electrode Active Material

Nickel sulfate (NiSO₄ · 6H₂O), cobalt sulfate (CoSO₄ · 7H₂O), and manganese sulfate (MnSO₄ · H₂O) as metal raw materials were dissolved in a molar ratio of 95:4:1 in distilled water as a solvent to prepare a mixed solution, and in order to form a compound, ammonia water (NH₄OH) and sodium hydroxide (NaOH) as a precipitant were prepared.

After adding the10 wt% of diluted ammonia water solution to a continuous reactor, the metal raw material mixed solution was continuously added thereto, and then, the sodium hydroxide was added thereto to maintain pH 11 inside the reactor. After slowly conducting a reaction for about 80 hours, when the reaction was stabilized, a product overflown therefrom was collected and then, washed and dried, obtaining a final precursor. Accordingly, a nickel-based composite hydroxide (Ni_{0.95}CO_{0.04}Mn_{0.01}(OH)₂) in a form of secondary particles in which primary particles were agglomeraed was obtained therefrom and then, washed and dried.

The nickel-based composite hydroxide was mixed with LiOH so that a lithium to a total amount of metal of the nickel-based composite hydroxide had a molar ratio of 1.04 and then, primarily heat-treated at about 750 °C for 15 hours, obtaining a lithium nickel-based composite oxide (Li_{1.04}Ni0_{0.95}Co_{0.04}Mn0_{0.01}O₂). The obtained lithium nickel-based composite oxide were in a form of secondary particles in which primary particles were agglomerated and which had an average particle diameter of about 15 µm.

Distilled water, sodium hydroxide, and aluminum sulfate were added to a 1 L reactor and then, stirred at about 350 rpm for about 5 minutes to dissolve salts, preparing a coating solution. The coating solution, in which the salts were completely dissolved, appeared colorless and transparent. While continuously stirring the coating solution, the prepared lithium nickel-based composite oxide was added thereto for 1 minute and then, stirred for 30 minutes, preparing a first mixed solution. Subsequently, cobalt sulfate was added to the first mixed solution and then, stirred, preparing a second mixed solution. Herein, in the positive electrode active material, the aluminum sulfate had an aluminum content (e.g., amount) of 0.2 mol%, the sodium hydroxide had a sodium content (e.g., amount) of 6.0 mol%, and the cobalt sulfate had a cobalt content (e.g., amount) of 3.0 mol%, based on 100 mol% of a total metal in the lithium nickel-based composite oxide excluding (e.g., not including) lithium (e.g., based on a total of 100 mol % of metal in the lithium nickel-based composite oxide excluding (e.g., not including) lithium).

The second mixed solution, from which the solvent was removed by using an aspirator and a filter press, was vacuum-dried at 190 °C, obtaining a coated product.

The coated product was secondarily heat-treated at 730 °C for 8 hours under an oxygen atmosphere, preparing a positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive (e.g., electrically conductive) material were mixed to prepare positive electrode active material layer slurry, and the slurry was coated on an aluminum foil current collector and then, dried and compressed to manufacture a positive electrode.

97.5 wt% of a graphite negative electrode active material, 1.5 wt% of carboxymethyl cellulose, and 1 wt% of a styrene butadiene rubber was mixed in a water solvent to prepare a negative electrode active material layer slurry. The negative electrode active material layer slurry was coated on a copper foil current collector, dried, and compressed to manufacture a negative electrode.

Subsequently, the positive electrode was used with the negative electrode and a polytetrafluoroethylene separator, and in addition, an electrolyte solution prepared by dissolving 1 M LiPF₆ in a mixed solvent of ethylene carbonate and dimethyl carbonate in a volume ratio of 3:7 was used to manufacture a rechargeable lithium battery cell in a common method.

### Examples 2 to 4

A positive electrode active material and a rechargeable lithium battery cell were manufactured in substantially the same manner as in Example 1 except that the aluminum content (e.g., amount) of the aluminum sulfate, the sodium content (e.g., amount) of the sodium hydroxide, and the cobalt content (e.g., amount) of the cobalt sulfate, based on 100 mol% of the total metal excluding (e.g., not including) lithium (e.g., based on a total of 100 mol% of metal excluding (e.g., not including) lithium) in the positive electrode active material, were changed as shown in Table 1.

### Comparative Examples 1 to 4

A positive electrode active material and a rechargeable lithium battery cell were manufactured in substantially the same manner as in Example 1 except that the aluminum content (e.g., amount) of the aluminum sulfate, the sodium content (e.g., amount) of the sodium hydroxide, and the cobalt content (e.g., amount) of the cobalt sulfate, based on 100 mol% of a total metal excluding (e.g., not including) lithium (e.g., based on a total of 100 mol% of metal excluding (e.g., not including) lithium) in the positive electrode active material, were changed as shown in Table 1.

### Evaluation Example 1: Measurement of Sodium Content in Positive Electrode Active Material

The positive electrode active materials according to Examples 1 to 4 and Comparative Examples 1 to 4 were measured with respect to sodium contents (e.g., amounts) by using Inductively Coupled Plasma - Atomic Emission Spectroscopy (ICP-AES), and the results are shown in Table 1.

**Table 1**

| | Co (mol%) | Al (mol%) | Na (mol%) | pH of coating solution | Sodium content (e.g. , amount) in positive electrode active mat erial (wt%) |
|---|---|---|---|---|---|
| Example 1 | 3 | 0.2 | 6 | 13.9 | 0.173 |
| Example 2 | 3 | 0.5 | 6 | 13.5 | 0.126 |
| Example 3 | 2 | 0.2 | 4 | 13.4 | 0.108 |
| Example 4 | 2 | 0.5 | 4 | 12.8 | 0.082 |
| Comparative Example 1 | 3 | 0.2 | 1 | 12.2 | 0.063 |
| Comparative Example 2 | 3 | 0.2 | 12 | 14 | 0.245 |
| Comparative Example 3 | 2 | 0.2 | 1 | 12.2 | 0.066 |
| Comparative Example 4 | 3 | 0 | 0 | 11.5 | 0.032 |

Referring to Table 1, when after adding an aluminum raw material and sodium hydroxide to an aqueous (e.g., water-soluble) solvent according to Examples 1 to 4 to first prepare a coating solution with pH in a range of 12.5 to 14 and then, adding the positive electrode active materials containing a lithium nickel-based composite oxide thereto and mixing them, when a cobalt raw material was mixed therewith and then, dried and heat-treated to form a coating layer, the sodium content (e.g., amount) in the positive electrode active material was confirmed to be in a range of 0.082 wt% to 0.173 wt%.

### Evaluation Example 2: Evaluation of Initial Charge/Discharge Capacity and Efficiency

The rechargeable lithium battery cells of Examples and Comparative Examples were charged to an upper voltage limit of 4.45 V at a constant current of 0.2 C and to 0.05 C at the constant voltage and discharged to a cut-off voltage of 3.0 V at 0.2 C at 25 °C for initial charge and discharge. In Table 2, initial charge capacity, initial discharge capacity, and a ratio of the initial discharge capacity to the initial charge capacity as efficiency are provided.

### Evaluation Example 3: High-temperature Cycle-life Characteristics

After the initial charge/discharge of Evaluation Example 2, the cells were 50 times or more repeatedly charged and discharged at 1.0 C within a voltage range of 3.0 V to 4.45 V at 45 °C to calculate a ratio of 50^{th} cycle discharge capacity to the initial discharge capacity, and the results are shown in Table 2.

**Table 2**

| | 0.2 C charge (mAh/g) | 0.2 C discharge (mAh/g) | Efficiency (%) | High-temperature cycle-life (%, 45 °C, 50 cyc) |
|---|---|---|---|---|
| Example 1 | 248.2 | 222.6 | 89.7 | 96.2 |
| Example 2 | 247.3 | 221.3 | 89.5 | 96.4 |
| Example 3 | 248 | 224.1 | 90.4 | 96.0 |
| Example 4 | 248.5 | 223.5 | 90.0 | 96.2 |
| Comparative Example 1 | 247.7 | 223.8 | 90.4 | 94.8 |
| Comparative Example 2 | 246.9 | 215.7 | 87.4 | 94.3 |
| Comparative Example 3 | 248 | 224.4 | 90.5 | 94.3 |
| Comparative Example 4 | 246.9 | 216.9 | 87.8 | 94.0 |

Referring to Table 2, when after adding an aluminum raw material and sodium hydroxide to an aqueous (e.g., water-soluble) solvent to first prepare a coating solution with pH in a range of 12.5 to 14 and then, adding the positive electrode active materials containing a lithium nickel-based composite oxide thereto and mixing them, a cobalt raw material was mixed therewith and then, dried and heat-treated to form a coating layer, Examples 1 to 4 having the sodium content (e.g., amount) of 0.082 wt% to 0.173 wt%, based on 100 mol% of a total metal excluding (e.g., not including) lithium (e.g., based on a total of 100 mol % of metal excluding (e.g., not including) lithium) in each positive electrode active material, compared to Comparative Examples 1 to 4 not having the sodium content (e.g., amount) within the range, were confirmed that charge/discharge efficiency were similar and high-temperature cycle-life characteristics were improved or enhanced.

For example, while the improvements or enhancements in high-temperature cycle-life characteristics of Examples 1 to 4 over Comparative Examples 1 to 4 appear modest - ranging from about 1.4% to about 2.4% - these gains are meaningful in the context of lithium-ion battery degradation mechanisms. Even small percentage increases in cycle retention at elevated temperatures (e.g., 45 °C) may translate into significantly or substantially longer operational lifespans in real-world applications, for example, in electric vehicles and energy storage systems where thermal stress is a factor. The consistent performance across all examples also indicates that the coating process yields reproducible and stable results, which is critical for commercial scalability.

Regarding efficiency, although the initial charge/discharge efficiency of Examples 1 to 4 is similar to or slightly lower than that of some Comparative Examples, the desired advancement lies in its ability to maintain high efficiency while also improving or enhancing thermal stability and cycle retention. The coating layer including aluminum, cobalt, and sodium does not compromise the electrochemical reversibility of the active material, and instead contributes to long-term durability. This balance between efficiency and stability supports utility in high-voltage, high-temperature environments, where comparable materials may suffer from accelerated degradation despite having comparable initial performance.

A battery manufacturing device, a battery management system (BMS) device, and/or any other relevant devices or components according to one or more embodiments of the present disclosure may be implemented utilizing any suitable hardware, firmware (e.g., an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device utilizing a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the scope of the appended claims and equivalents thereof. It therefore will be understood that one or more embodiments described herein are just illustrative but not limitative in all aspects.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A method for preparing a positive electrode active material comprising:
(i) adding an aluminum raw material and sodium hydroxide to an aqueous solvent to prepare a coating solution having a pH range of 12.5 to 14;
(ii) adding core particles to the coating solution to prepare a first mixed solution, the core particles comprising a lithium nickel-based composite oxide;
(iii) adding a cobalt raw material to the first mixed solution to prepare a second mixed solution; and
(iv) drying and heat-treating the second mixed solution to obtain a positive electrode active material.

2. The method as claimed in claim 1, wherein an aluminum content in the aluminum raw material, based on a total of 100 mol% of metal excluding lithium in the lithium nickel-based composite oxide, is in a range of from 0.1 mol% to 1.0 mol%.

3. The method as claimed in claim 1 or 2, wherein a sodium content in the sodium hydroxide, based on a total of 100 mol% of metal excluding lithium in the lithium nickel-based composite oxide, is in a range of from 2.0 mol% to 8.0 mol%.

4. The method as claimed in any one of claims 1 to 3, wherein pH of the first mixed solution is in a range of from 10 to 14.

5. The method as claimed in any one of claims 1 to 4, wherein, in the lithium nickel-based composite oxide, a nickel content, based on a total of 100 mol% of metal excluding lithium, is greater than or equal to 80 mol%.

6. The method as claimed in any one of claims 1 to 5, wherein the lithium nickel-based composite oxide is represented by Chemical Formula 1:
**Chemical Formula 1** Liₐ₁Niₓ₁M¹_{y1}M²_{z1}O_{2-b1}X_{b1}
wherein, in Chemical Formula 1, 0.9≤a1≤1.8, 0.3≤x1≤1, 0≤y1≤0.7, 0≤ z1≤0.7, 0.9≤x1+y1+z1 ≤1.1, and 0≤b1 ≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, Y, Zn, and Zr, M¹ and M² are different from each other, and X is one or more elements selected from among F, P, and S.

7. The method as claimed in any one of claims 1 to 6, wherein a cobalt content in the cobalt raw material, based on a total of 100 mol% of metal excluding lithium in the lithium nickel-based composite oxide, is in a range of from 1.0 mol% to 5.0 mol%.

8. The method as claimed in any one of claims 1 to 7, wherein a molar ratio of a sodium content in the sodium hydroxide to a cobalt content in the cobalt raw material is in a range of from 1.5:1 to 3:1.

9. The method as claimed in claim 1, wherein pH of the second mixed solution is in a range of 9 to 11.

10. A positive electrode active material, comprising:
a plurality of core particles comprising a lithium nickel-based composite oxide; and
a coating layer on a surface of the plurality of core particles and comprising aluminum and cobalt,
wherein the positive electrode active material further comprises sodium, and
wherein a sodium content, based on a total of 100 wt% of metal excluding lithium in the lithium nickel-based composite oxide, is in a range of from 0.08 wt% to 0.2 wt%.

11. The positive electrode active material as claimed in claim 10, wherein, in the lithium nickel-based composite oxide, a nickel content, based on a total of 100 mol% of metal excluding lithium, is greater than or equal to 80 mol%.

12. The positive electrode active material as claimed in claim 10 or 11, wherein the lithium nickel-based composite oxide is represented by Chemical Formula 1:
**Chemical Formula 1** Liₐ₁Niₓ₁M¹M²_{z1}O_{2-b1}X_{b1}
wherein, in Chemical Formula 1, 0.9≤a1 ≤1.8, 0.3≤x1≤1, 0≤y1≤0.7, 0≤ z1≤0.7, 0.9≤x1+y1+z1≤1.1, and 0≤b1≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, Y, Zn, and Zr, M¹ and M² are different from each other, and X is one or more elements selected from among F, P, and S.

13. The positive electrode active material as claimed in any one of claims 10 to 12, wherein a sodium content, based on a total of 100 wt% of metal excluding lithium in the lithium nickel-based composite oxide, is in a range of from 0.082 wt% to 0.173 wt%.

14. A positive electrode, comprising:
a current collector; and
a positive electrode active material layer on the current collector,
wherein the positive electrode active material layer comprises the positive electrode active material as claimed in any one of claims 10 to 13.

15. A rechargeable lithium battery comprising:
the positive electrode as claimed in claim 14;
a negative electrode; and
an electrolyte.
